# FASCICULE DE BREVET EUROPEEN

(11) **EP 3 408 545 B1**
(45) Date de publication et mention de la délivrance du brevet: **16.08.2023**
(21) Numéro de dépôt: 17701358.8
(22) Date de dépôt: 05.01.2017
(51) Int. Cl.: F16B 21/07, B60R 16/02, H02G 3/02, F16B 37/08

(54) **AGENCEMENT DE FIXATION ET DE DEMONTAGE D'UNE PLATINE SUPPORTANT DES DISPOSITIFS DE BRIDAGE DE FAISCEAU ELECTRIQUE**
ANORDNUNG ZUM BEFESTIGEN UND ENTFERNEN EINER PLATTE ZUM TRAGEN VON KABELBAUMKLEMMVORRICHTUNGEN
ARRANGEMENT FOR ATTACHING AND REMOVING A PLATE SUPPORTING WIRING HARNESS CLAMPING DEVICES

(30) Priorité: 26.01.2016 FR 1650628
(43) Date de publication de la demande: 05.12.2018
(73) Titulaire: PSA Automobiles SA, 78300 Poissy (FR)
(72) Inventeur: MORO, Michel, 25550 Bavans (FR); MILLET, Thierry, 90500 Beaucourt (FR); GREGOIRE, Simon, 25200 Grand Charmont (FR)
(86) Numéro de dépôt international: PCT/FR2017/050027
(87) Numéro de publication internationale: WO 2017/129874

(56) Documents cités:
- DE-A1-102010 032 778
- JP-U- S63 142 412
- US-A- 5 760 338

## Description

La présente invention concerne l'agencement de fixation et de démontage d'une platine supportant des dispositifs de bridage d'un faisceau électrique déployé sur la structure de la caisse d'un véhicule. En particulier, la fixation et le démontage de la platine est effectué sans outil.

Dans l'état de la technique, nous connaissons le document US940355 qui décrit un système de fixation de fermeture et d'ouverture rapide par exemple d'un couvercle sur un boîtier. A cet effet, des vis emprisonnent la paroi du couvercle sous leurs têtes, les vis possédant un fût en forme de sapin sont engagées dans des fourreaux fendus sur leur longueur liée au boîtier. Les fourreaux comportent des moyens de rétention au niveau du fût de la vis, lorsque celle-ci est engagée par poussée suivant son axe. Par contre, pour extraire la vis, il convient de s'équiper d'un tournevis pour l'introduire dans la fente de sa tête et la tourner d'un quart de tour de manière à écarter en forçant les parties élastiques du fourreau de manière à libérer les moyens de rétention du fût en forme de sapin de la vis. Ce système de fixation nécessite l'utilisation d'un outil et d'un effort non négligeable pour écarter les éléments élastiques du fourreau. Le document DE102010032778 décrit un dispositif conçu pour se bloquer sur un boulon fileté. Le dispositif comporte des bras de verrouillage comportant des crans qui permettent de l'immobiliser sur le fût de la vis, les bras de verrouillage sont prolongés latéralement par des palettes permettant d'écarter les bras de verrouillage pour extraire le dispositif immobilisé sur le fût de la vis. Le dispositif n'est pas simple à utiliser car il faut agir sur les bras de verrouillage pour le l'engager et l'immobilisé sur le fût de la vis.

Le document US 5 760 338 A divulgue une pince de faisceau de câblage pour fixation à un goujon ou à un boulon ayant une plaque de base pour fixation à un faisceau de câblage et une partie de maintien ayant des bras élastiques opposés. Les parties en regard des bras présentent des dents destinées à coopérer avec un filetage d'un goujon ou d'un boulon. Les bras s'étendent vers l'extérieur à partir de la partie de maintien et sont mobiles à l'écart l'un de l'autre généralement parallèlement à l'axe du harnais pour libérer le goujon ou boulon.

Le but de l'invention est donc de proposer un agencement de fixation d'une platine par une simple poussée pour la fixer fermement sur un élément solidaire de la structure de la caisse d'un véhicule. Le démontage de la platine est réalisé simplement en désactivant les moyens de rétention.

A cet effet, la présente invention a pour objet un agencement de fixation et de démontage d'une platine comportant des dispositifs de bridage d'un faisceau électrique et des moyens de rétention sur un moyen de maintien érigé sur une structure de caisse de véhicule, la platine étant solidarisé sur le moyen de maintien fixé sur la structure par encliquetage et désolidarisée par un désengagement du moyen de rétention, sans outils pour enlever la platine, et en ce que le moyen de rétention de la platine possède une base sur laquelle sont solidarisés deux blocs comportant une paroi verticale, chaque paroi verticale comporte des languettes fixées sur les parois sur une portion de leur longueur de façon inclinée légèrement vers le haut et se prolonge ensuite verticalement sur une autre portion, et dans lequel le prolongement de la portion de languette comporte un renflement en forme de triangle régulier.

Suivant une autre caractéristique avantageuse, la base de la platine comporte une ouverture destinée à permettre le passage des moyens de rétention.

Suivant une autre caractéristique, les parois verticales sont placées en vis à vis.

Selon une variante, les portions de languettes verticales comportent une base élargie et une extrémité libre d'épaisseur réduite, la face de la languette en regard de la paroi étant inclinée.

Selon une autre variante, les portions de languettes légèrement inclinées vers le haut sont flexibles.

Avantageusement, le moyen de rétention est un goujon solidarisé sur la structure possédant des stries répartis le long de son fût.

Selon une autre caractéristique, les stries ont une section de triangle régulier.

Avantageusement, la platine comporte deux dispositifs de bridage de faisceaux et deux moyens de rétention aptes à s'encliqueter et se désolidariser avec deux moyens de maintien fixés sur la structure de la caisse du véhicule.

D'autres caractéristiques et avantages de l'invention apparaîtront clairement à la lecture de la description ci-après, donnée à titre indicatif en référence aux dessins annexés dans lesquels:
- La figure 1 est une vue en perspective d'une partie de structure de caisse de véhicule comprenant une platine fixée sur un élément solidaire de la structure, supportant des dispositifs de bridage de faisceau électrique, selon l'invention ;
- La figure 2 est une vue schématique de face de l'agencement de fixation et de démontage d'une platine, suivant l'invention.

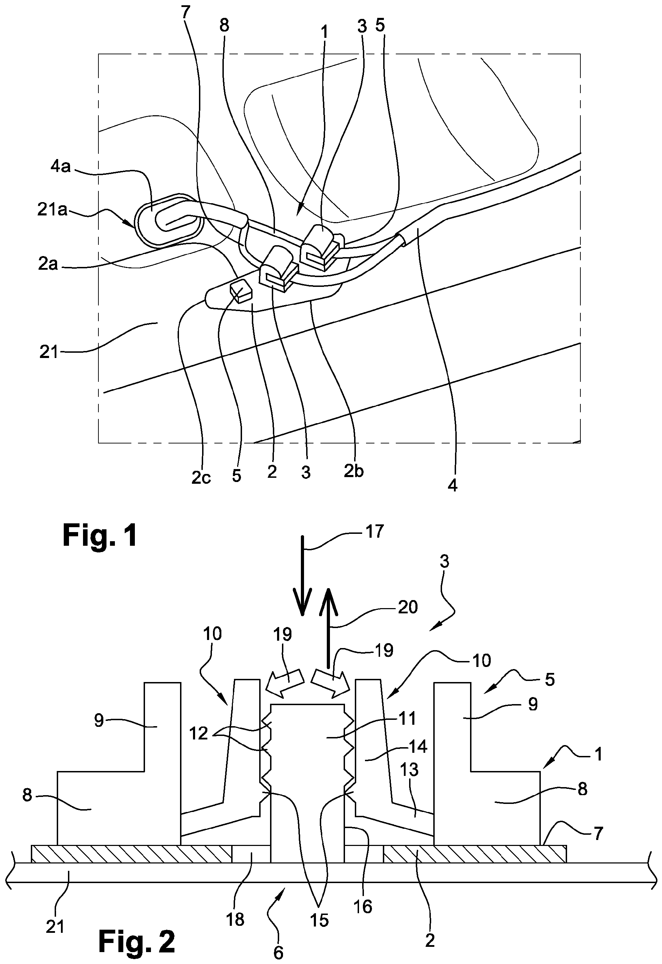

La figure 1 est une vue en perspective de l'agencement 1 d'une partie de structure 21 de caisse de véhicule comprenant une platine 2 fixée sur un élément solidaire de la structure 21, supportant des dispositifs de bridage 3 de faisceau électrique 4, selon l'invention. Les faisceaux électriques 4 permettent l'alimentation en énergie de divers composants. A cet effet, le faisceau électrique 4 chemine sur la structure 21 de caisse pour traverser une ouverture 21a. Pour cela, un bouchon en polymère 4a est polymérisé sur le faisceau 4 et vient obturer l'ouverture 21a réalisée dans la paroi de la structure 21 pour réaliser l'étanchéité, et venir se raccorder sur un composant non visible. Au niveau de la platine 2, le faisceau 4 est séparé en deux câbles distincts 7, 8 de manière à ce que chacun des câbles soit maintenu dans un des deux dispositifs de bridage 3 placé sensiblement côte à côte sur la platine 2. Les deux extrémités de la platine 2 comportent les deux moyens de rétentions 5 sur des moyens de maintiens (non visibles) solidaires de la paroi de la structure 21. L'agencement 1 comporte la platine 2 qui possède une forme longiligne dont une bordure 2a est droite et l'autre bordure est courbe 2b dont les extrémités sont arrondies 2c.

La figure 2 est une vue schématique de face de l'agencement 1 de fixation et de démontage d'une platine 2, suivant l'invention. Les moyens de rétention 6 sont identiques, et ils sont situés à chacune des extrémités de la platine 2. Un seul sera donc décrit. Le moyen de maintien 5 comprend deux blocs 8 solidaires de la base 7 de la platine 2. Les blocs 8 comprennent une paroi verticale 9 placée en vis-à-vis. Des languettes 10 sont fixées sur les parois 9 sur une portion 13 de leur longueur de façon inclinée légèrement vers le haut et se prolonge ensuite verticalement sur une autre portion 14 de manière à encadrer un moyen de maintien 6. Le moyen de maintien 6 est constitué par un goujon 11 fixé verticalement sur la structure 21 de caisse. Le goujon 11 présente la particularité de posséder des stries 12 réparties le long de son fût 16. Les stries 12 ont une forme de triangle régulier. Dans le prolongement de la portion 13 un renflement 15 en forme de triangle régulier est placé en saillie de manière que son sommet vienne tangenter sur le fût du goujon 11. Ce renflement 15 possède des dimensions identiques aux stries 12 du goujon 11. Les renflements 15 des languettes 10 sont aptes à coopérer avec les stries 12 du goujon 11. On comprend que lorsque l'ouverture 18 de la base 7 de la platine 2 est dirigée verticalement vers les goujons 11 suivant la flèche 17, les languettes 10 sont engagées sur le goujon 11 et les renflements 15 viennent glisser et s'effacer sur les stries 12 du goujon 11 jusqu'à ce que la platine 2 soit en appui sur la structure 21 de caisse. Dans cette configuration, les renflements 15 viennent en butée contre les stries 12 adjacents pour réaliser le blocage de la platine 2. A l'inverse, pour libérer la platine 2, il suffit d'écarter manuellement l'extrémité libre des languettes 10 suivant les flèches 19, pour désengager les renflements 15 des languettes 10 des stries 12 des goujons 11 pour extraire suivant la flèche 20 la platine 2 simplement et sans aucun outil.

## Revendications

1. Agencement (1) de fixation et de démontage d'une platine (2) comportant des dispositifs de bridage (3) d'un faisceau électrique et des moyens de rétention (5) sur un moyen de maintien (6) érigé sur une structure (21) de caisse de véhicule, **caractérisé en ce que** la platine (2) est solidarisée sur le moyen de maintien (6) fixé sur la structure (21) par encliquetage et désolidarisée par un désengagement du moyen de rétention (5), sans outils pour enlever la platine (2), le moyen de rétention (5) de la platine (2) possède une base (7) sur laquelle sont solidarisés deux blocs (8) comportant des parois verticales (9) et **en ce que** chaque paroi verticale (9) comporte des languettes (10) fixées sur les parois (9) sur une portion (13) de leur longueur de façon inclinée légèrement vers le haut et se prolonge ensuite verticalement sur une autre portion (14), et
dans lequel le prolongement de la portion (13) de languette (10) comporte un renflement (15) en forme de triangle régulier.

2. Agencement (1) selon la revendication 1, **caractérisé en ce que** la base de la platine (2) comporte une ouverture (18) destinée à permettre le passage des moyens de rétention (5).

3. Agencement (1) selon la revendication 1, **caractérisé en ce que** les parois verticales (9) sont placées en vis à vis.

4. Agencement (1) selon la revendication 1, **caractérisé en ce que** les portions (14) de languettes (10) verticales comportent une base élargie et une extrémité libre d'épaisseur réduite, la face de la languette (10) en regard de la paroi verticale (9) étant inclinée.

5. Agencement (1) selon la revendication 2, **caractérisé en ce que** les portions (13) de languettes (10) légèrement inclinées vers le haut sont flexibles.

6. Agencement (1) selon la revendication 2, **caractérisé en ce que** le moyen de rétention (6) est un goujon (11) solidarisé sur la structure (21) possédant des stries (12) répartis le long de son fût (16).

7. Agencement (1) selon la revendication 6, **caractérisé en ce que** les stries (12) ont une section de triangle régulier.

8. Agencement (1) selon la revendication 1, **caractérisé en ce que** la platine (2) comporte deux dispositifs de bridage (3) de faisceaux et deux moyens de rétention (5) aptes à s'encliqueter et se désolidariser avec deux moyens de maintien (6) fixés sur la structure (21) de la caisse du véhicule.

## Patentansprüche

1. Anordnung (1) zur Befestigung und Demontage einer Platine (2), die Vorrichtungen zum Einspannen (3) eines elektrischen Kabelbaums und Rückhaltemittel (5) auf einem Haltemittel (6) umfasst, das auf einer Struktur (21) einer Fahrzeugkarosserie errichtet ist, **dadurch gekennzeichnet, dass** die Platine (2) auf dem auf der Struktur (21) befestigten Haltemittel (6) durch Einrasten fest verbunden und durch ein Lösen des Rückhaltemittels (5) gelöst ist, ohne Werkzeuge zum Entfernen der Platte (2), wobei das Haltemittel (5) der Platte (2) eine Basis (7) aufweist, auf der zwei Blöcke (8) mit vertikalen Wänden (9) fest verbunden sind, und dass jede vertikale Wand (9) Zungen (10) aufweist, die an den Wänden (9) über einen Abschnitt (13) ihrer Länge leicht nach oben geneigt befestigt sind und sich dann vertikal über einen anderen Abschnitt (14) verlängern, und wobei die Verlängerung des Abschnitts (13) der Zungen (10) eine Ausbuchtung (15) in Form eines regelmäßigen Dreiecks aufweist.

2. Anordnung (1) nach Anspruch 1, **dadurch gekennzeichnet, dass** die Basis der Platine (2) eine Öffnung (18) aufweist, die dazu bestimmt ist, den Durchgang der Rückhaltemittel (5) zu ermöglichen.

3. Anordnung (1) nach Anspruch 1, **dadurch gekennzeichnet, dass** die vertikalen Wände (9) einander gegenüberliegend angeordnet sind.

4. Anordnung (1) nach Anspruch 1, **dadurch gekennzeichnet, dass** die Abschnitte (14) der vertikalen Zungen (10) eine verbreiterte Basis und ein freies Ende mit reduzierter Dicke aufweisen, wobei die der vertikalen Wand (9) zugewandte Seite der Zunge (10) geneigt ist.

5. Anordnung (1) nach Anspruch 2, **dadurch gekennzeichnet, dass** die leicht nach oben geneigten Abschnitte (13) der Zungen (10) flexibel sind.

6. Anordnung (1) nach Anspruch 2, **dadurch gekennzeichnet, dass** das Rückhaltemittel (6) ein Bolzen (11) ist, der fest mit der Struktur (21) verbunden ist, die über Rillen (12) verfügt, die entlang ihres Schafts (16) verteilt sind.

7. Anordnung (1) nach Anspruch 6, **dadurch gekennzeichnet, dass** die Rillen (12) einen Querschnitt eines regelmäßigen Dreiecks haben.

8. Anordnung (1) nach Anspruch 1, **dadurch gekennzeichnet, dass** die Platine (2) zwei Vorrichtungen (3) zum Einspannen von Kabelbäumen und zwei Haltemittel (5) aufweist, die geeignet sind, mit zwei Haltemitteln (6), die an der Struktur (21) der Fahrzeugkarosserie befestigt sind, einzurasten und sich davon zu lösen.

## Claims

1. Arrangement (1) for fixing and removing a plate (2) comprising clamping devices (3) for an electrical harness and retention means (5) on a holding means (6) erected on a vehicle body structure (21), **characterised in that** the plate (2) is secured to the holding means (6) fixed to the structure (21) by latching and disengaged by disengaging the retention means (5), without tools for removing the plate (2), the retaining means (5) of the plate (2) has a base (7) to which two blocks (8) comprising vertical walls (9) are fastened, and **in that** each vertical wall (9) comprises tongues (10) fastened to the walls (9) over a portion (13) of their length so as to slope slightly upwards and then extends vertically over another portion (14), and
wherein the extension of the tongue (10) portion (13) comprises a bulge (15) in the shape of a regular triangle.

2. Arrangement (1) according to claim 1, **characterised in that** the base of the plate (2) comprises an opening (18) intended to allow the passage of the retention means (5).

3. Arrangement (1) as claimed in claim 1, **characterised in that** the vertical walls (9) are placed opposite each other.

4. Arrangement (1) as claimed in claim 1, **characterised in that** the portions (14) of vertical tongues (10) have an enlarged base and a free end of reduced thickness, the face of the tongue (10) facing the vertical wall (9) being inclined.

5. Arrangement (1) according to Claim 2, **characterised in that** the portions (13) of tabs (10) which are slightly inclined upwards are flexible.

6. Arrangement (1) according to claim 2, **characterised in that** the retention means (6) is a stud (11) secured to the structure (21) having grooves (12) distributed along its shaft (16).

7. Arrangement (1) according to claim 6, **characterised in that** the ridges (12) have a regular triangular cross-section.

8. Arrangement (1) according to claim 1, **characterised in that** the plate (2) comprises two bundle clamping devices (3) and two retention means (5) capable of snapping into and out of engagement with two holding means (6) fixed to the structure (21) of the vehicle body.
